# EUROPEAN PATENT APPLICATION

(11) **EP 4 141 442 A1**
(43) Date of publication of application: **01.03.2023**
(21) Application number: 21930312.0
(22) Date of filing: 22.11.2021
(51) Int. Cl.: G01N 31/12

(54) **ELEMENT ANALYSIS DEVICE, OPERATION METHOD FOR ELEMENT ANALYSIS DEVICE, AND WORK PROGRAM FOR ELEMENT ANALYSIS DEVICE**

(30) Priority: 12.03.2021 JP 2021040249
(71) Applicant: HORIBA, Ltd., Kyoto-shi, Kyoto 601-8510 (JP)
(72) Inventor: INOUE, Takahito, Kyoto-shi, Kyoto 601-8510 (JP); UCHIHARA, Hiroshi, Kyoto-shi, Kyoto 601-8510 (JP)
(74) Representative: Isarpatent
(86) International application number: PCT/JP2021/042816
(87) International publication number: WO 2022/190466

(57) **Abstract**

A purging mechanism 4 includes an injection channel 41 through which a purge gas is injected into a heating furnace 1, a discharge channel 42 that connects the heating furnace 1 to outside air to discharge the purge gas having been injected into the heating furnace 1 to the outside air, and a purge gas flow rate adjusting mechanism 43 by which a flow rate of the purge gas is adjusted by changing a flow resistance of the discharge channel 42 between a plurality of levels, or continuously.

## Description

### Technical Field

The present invention relates to an elemental analysis device for analyzing chemical elements contained in a sample based on sample gas generated by heating the sample.

### Background Art

In this type of elemental analysis device, for example, a sample is placed in a graphite crucible installed in a heating furnace, and electric current is applied to the graphite crucible, thereby causing the crucible to generate heat, by which the sample is heated.

In this elemental analysis device, every time an analysis is to be carried out, a heating furnace is opened to replace the graphite crucible, and therefore, atmospheric components enter the heating furnace. In addition, a sample gas generated in the previous analysis remains in the heating furnace. Therefore, purging, which is discharging of the residual gas inside the heating furnace, is required prior to the analysis.

To achieve this end, a conventional elemental analysis device is provided with an injection channel through which a purge gas, which is an inert gas such as He or Ar, is injected from a gas cylinder into a heating furnace, and a discharge channel through which the purge gas having been injected into the heating furnace is discharged. The purge gas is then circulated inside of the heating furnace, to discharge the residual gas with the purge gas.

The discharge channel is provided with a capillary, and the flow rate of the purge gas is limited thereby so as to prevent the flow rate from becoming excessively high. Therefore, purging requires a certain length of time.

To address this issue, as disclosed in Patent Literature 1 (JP H5-33057 U), there has been an idea by which the time of discharging the residual gas from the heating furnace is reduced using a configuration connecting an ejector pump to the outgoing end of the discharge channel, and causing the ejector pump to suction the residual gas.

### Citation List

### Patent Literature

Patent Literature 1: JP H5-33057 U

### Summary of Invention

### Technical Problem

However, with such a configuration, if an analysis is started immediately after purging, because inside of the heating furnace is negatively pressurized, the pressure fluctuates at the timing at which the connection of the heating furnace is switched to the analysis device main unit having the NDIR, for example, to carry out an analysis, and such a fluctuation causes a problem that the accuracy of the analysis does not stabilize. If the pressure inside the heating furnace is to be recovered to the positive pressure necessary for the analysis, however, a significant time reduction cannot be achieved, because such an attempt is started from the negative pressure and the time proportional thereto will be required.

Furthermore, because the ejector pump suctions the gas unlimitedly, a large amount of purge gas may be consumed at the time of purging.

In consideration of the problems described above, the present invention has been made to provide an elemental analysis device capable of reducing the time required for purging, without sacrificing the accuracy of the analysis, and of keeping the amount of purge gas consumed in the purging to an appropriate level.

### Solution to Problem

In other words, an elemental analysis device according to the present invention includes: a heating furnace that heats a sample to generate a sample gas; an analyzing unit that analyzes an element contained in the sample based on the sample gas; and a purging mechanism that circulates a purge gas to discharge a residual gas inside the heating furnace, in which the purging mechanism includes an injection channel that injects the purge gas into the heating furnace, a discharge channel that connects the heating furnace to outside air, and discharges the purge gas having been injected into the heating furnace to the outside air, and a purge gas flow rate adjusting mechanism that changes a flow resistance of the discharge channel between a plurality of levels, or continuously.

With such a configuration, when purging is performed before an analysis is started, by sending the purge gas after decreasing the flow resistance of the discharge channel, substantial portion of the purging can be completed within a short time period. By then increasing the flow resistance of the discharge channel, a pressure-increasing effect of the flow resistance can raise the internal pressure of the heating furnace. In this manner, it is possible to achieve a condition where the analysis can be carried out stably, immediately after the purging. Furthermore, by adjusting the flow resistance, it is possible to optimize the amount of purge gas consumption.

In the manner described above, according to the present invention, it is possible to reduce the time required in the purging, while maintaining the accuracy of the analysis. Moreover, it is possible to maintain the amount of purge gas consumed in the purging to an appropriate level.

As a specific embodiment capable of achieving such effects sufficiently using a simple configuration, the discharge channel may include a first exhaust channel and a second exhaust channel that are provided in parallel with each other, and the purge gas flow rate adjusting mechanism may include an on-off valve that opens or closes the second exhaust channel so that the flow resistance of the discharge channel is changed between two levels.

With a configuration in which the first exhaust channel includes a resistive channel such as a capillary, and the second exhaust channel substantially is made only from a piping member, the on-off valve can be opened to connect the heating furnace to the outside air via the second exhaust channel. In this manner, the purge gas substantially at the atmospheric pressure flows therethrough, and to allow the heating furnace to be purged within a shorter time period. To conversely put, even with a purge gas flow rate lower than that conventionally used, a purging effect equivalent to the conventional example can be achieved. The inventors of the present invention were the first to reach this finding. Based on this knowledge, it has been found out that, provided that the purge gas is configured to flow through the heating furnace at a constant flow rate, a better purging effect can be achieved when the heating furnace is at the atmospheric pressure, rather than when the pressure of the heating furnace is raised to a level higher than the atmospheric pressure.

If the flow resistance of the discharge channel is configured to remain low for a certain period of time and is then changed to high, the flow resistance in the discharge channel is kept high while the pressure inside the heating furnace is also high, at the time of the completion of purging. Therefore, the process can be shifted smoothly to a subsequent analysis step.

If the injection channel is provided with a purge gas flow rate limiting mechanism for imposing a limit on the maximum flow rate of the purge gas, it is possible to prevent the purge gas from flowing excessively at the time of purging. Therefore, waste of the purge gas can be reduced, so that a cost cut can be achieved.

To be able to cope with various conditions, it is preferable for the purge gas channel limiting mechanism to be switchable between an operating state where the flow rate limiting operation is performed and a non-operating state where the flow rate limiting operation is not performed.

For example, as a possible configuration, the purge gas channel limiting mechanism is kept in the operating state while the flow resistance of the discharge channel is low, and the purge gas channel limiting mechanism is kept in the non-operating state while there is a high flow resistance in the discharge channel.

The present invention may be configured as a method for operating an elemental analysis device, the method including, when the purge gas is discharged, keeping the flow resistance of the discharge channel low for a certain period of time, and then changing the flow resistance to high, by operating the purge gas flow rate adjusting mechanism.

In addition, the present invention may be configured as a program for operating an elemental analysis device, the program causing a computer to exert a function, when the purge gas is discharged, of keeping the flow resistance of the discharge channel low for a certain period of time, and then changing the flow resistance to high, by operating the purge gas flow rate adjusting mechanism. Advantageous Effects of Invention

As described above, with the elemental analysis device according to the present invention, purging efficiency can be improved without sacrificing the accuracy of analyses.

### Brief Description of Drawings

FIG. 1 is a schematic of an overall configuration of an elemental analysis device according to an embodiment of the present invention.
FIG. 2 is a schematic for explaining an operation, illustrating a flow of purge gas during a purging operation of the elemental analysis device according to the embodiment.
FIG. 3 is a schematic for explaining an operation, illustrating the flow of purge gas during the purging operation of the elemental analysis device according to the embodiment.
FIG. 4 is a schematic for explaining an operation, illustrating the flow of purge gas during the purging operation of the elemental analysis device according to the embodiment.
FIG. 5 is a schematic for explaining an operation, illustrating the flow of purge gas during the purging operation of the elemental analysis device according to the embodiment.
FIG. 6 is a schematic for explaining an operation, illustrating the flow of the carrier gas and a sample gas during an analysis, in the elemental analysis device in the same embodiment.
FIG. 7 is data of experiment results exhibiting the effects achieved by the embodiment.

### Reference Signs List

- 100: elemental analysis device
- 1: heating furnace
- 2: analyzing unit
- 4: purging mechanism
- 41: injection channel
- 42: discharge channel
- 421: first exhaust channel
- 422: second exhaust channel

- 43: purge gas flow rate adjusting mechanism
- V1: on-off valve

### Description of Embodiments

An embodiment of the present invention will now be explained with reference to some drawings.

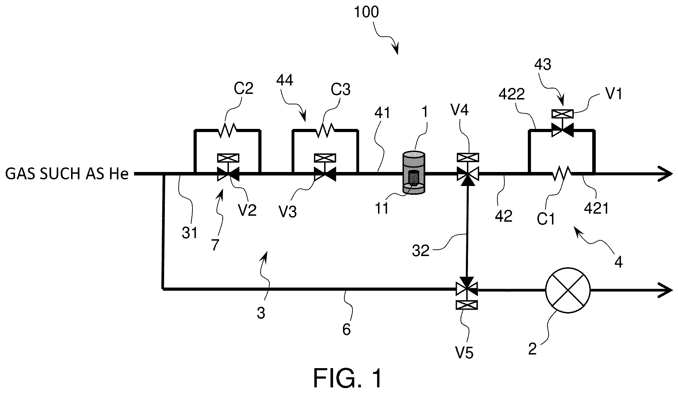

As illustrated in FIG. 1, an elemental analysis device 100 according to the present embodiment is configured to analyze a gas (hereinafter, referred to as a sample gas) generated by heating a sample such as a metal sample or a ceramic sample (hereinafter, simply referred to as a sample), to quantify a type, an amount, a ratio, or the like of chemical elements contained in the sample, and generally includes the following units.
(1) A heating furnace 1 configured to heat the sample.
(2) An analyzing unit 2 configured to analyze the sample gas generated inside the heating furnace 1.
(3) A sample gas delivering mechanism 3 configured to introduce a carrier gas that is an inert gas, such as He or Ar, into the heating furnace 1, and to send the sample gas to the analyzing unit 2 together with the carrier gas.

Each of these units will now be explained.

The heating furnace 1 is configured to heat a sample by heating a graphite crucible 11 in which the sample is placed, for example. The heating furnace 1 is configured to open in a manner parting into upper and lower parts so that the graphite crucible 11 can be inserted into the opened heating furnace 1. The graphite crucible 11 is nipped between a pair of electrodes, and the crucible 11 is heated by applying an electric current to the crucible 11 from these electrodes.

The analyzing unit 2 is configured to measure the concentrations (amounts) of O, H, and N contained in the sample by measuring CO, N₂, and H₂ in the sample gas, for example, and includes a plurality of non-dispersive infrared gas analyzers (NDIRs), a thermal conductivity detector (TCD), an oxidant, a gas remover, and the like, all of which are not illustrated. Note that, for these details, the description in Japanese Patent Application Laid-Open No. 2013 -250061 and the like is cited.

The sample gas delivering mechanism 3 includes a carrier gas introduction channel 31 via which the carrier gas is sent into the heating furnace 1, and a sample gas delivery channel 32 via which the sample gas generated inside the heating furnace 1 is sent to the analyzing unit 2 together with the carrier gas.

The carrier gas introduction channel 31 is mainly made from a piping member, and a start end thereof is connected to a high-pressure gas cylinder (not illustrated) that is a supply source of the carrier gas, and a terminal end thereof is connected to a gas inlet of the heating furnace 1. Note that a pressure adjusting valve (not illustrated) is provided upstream of the carrier gas introduction channel 31, so that the pressure inside the heating furnace 1 can be adjusted to a pressure higher than the atmospheric pressure, e.g., 80 kPa (180 kPa in absolute pressure) using the pressure adjusting valve, when the sample is heated.

The sample gas delivery channel 32 is mainly made from a piping member, and a start end thereof is connected to a gas outlet provided to the heating furnace 1 and a terminal end thereof is connected to the analyzing unit 2. To the sample gas delivery channel 32, a dust filter (not illustrated) by which soot and the like contained in the sample gas are filtered to remove dusts is provided.

In addition to the configurations described above, this elemental analysis device 100 also includes a purging mechanism 4 by which a carrier gas, which also serves as the purge gas, is injected into the heating furnace 1, and unnecessary substances such as the remaining gas in the heating furnace 1 is discharged, together with the carrier gas, to the outside air. The purging mechanism 4 will now be explained in detail. In the explanation, the carrier gas may be sometimes referred to as a purge gas to facilitate understanding.

Specifically, the purging mechanism 4 includes an injection channel 41 through which the purge gas is injected into the heating furnace 1, a discharge channel 42 that connects the heating furnace 1 to the outside air, and through which the purge gas having been injected into the heating furnace 1 is discharged to the outside air, and a purge gas flow rate adjusting mechanism 43 by which the flow resistance of the discharge channel 42 is changed between two levels.

In this embodiment, the carrier gas introduction channel 31 also functions as the injection channel 41, but the injection channel 41 may be provided separately from the carrier gas introduction channel 31.

The discharge channel 42 is mainly made from a piping member, and a start end thereof is connected to a predetermined portion in the middle of the sample gas delivery channel 32, and a terminal end thereof opens to the outside air. Note that provided to this connection is a switching valve V4 that is a three-way valve, so that it can be selected whether the gas in the heating furnace 1 is to be discharged to the outside air via the discharge channel 42, or the sample gas is to be introduced into the analysis mechanism via the sample gas delivery channel 32.

In addition, the discharge channel 42 is split into two, that is, into a first exhaust channel 421 and a second exhaust channel 422 in the middle. A capillary C1 that is a resistive channel is then provided to the first exhaust channel 421 so that the first exhaust channel 421 has a higher flow resistance than that of the second exhaust channel 422.

The purge gas flow rate adjusting mechanism 43 includes an on-off valve V1 provided to the second exhaust channel 422 and configured to change the flow resistance of the discharge channel 42 between two levels. In other words, when the on-off valve V1 is opened, the flow resistance of the discharge channel 42 is decreased so that the flow rate at which the purge gas flows is increased. When the on-off valve V1 is closed, the flow resistance is increased so that the flow rate at which the purge gas flows is decreased.

Furthermore, in the present embodiment, the purge gas flow rate limiting mechanism 44 for defining the maximum flow rate at which the purge gas flows at the time of purging, and a resistance adding mechanism 7 caused to operate at the time of depressurizing, in the manner which will be described later, are provided in series to the injection channel 41.

Specifically, the purge gas flow rate limiting mechanism 44 includes a capillary C3 that is a resistive channel provided to the injection channel 41. In this embodiment, a bypass is provided in parallel with the capillary C3, and an on-off valve V3 is provided to the bypass. While the on-off valve V3 is closed, the purge gas passes through only the capillary C3, and is subjected to the flow rate control of the resistance. In other words, the purge gas flow rate limiting mechanism 44 is put into the operating state. By contrast, while the on-off valve V3 is opened, the purge gas mainly passes through the bypass with substantially no resistance. In other words, the purge gas flow rate limiting mechanism 44 is in a state without the flow rate control, that is, in the non-operating state.

The resistance adding mechanism 7 is configured to add a flow resistance to the injection channel 41, and, specifically, includes a capillary C2 that is a resistive channel provided to the injection channel 41. In this embodiment, a bypass is provided in parallel with the capillary C2, and an on-off valve V2 is provided to the bypass. While the on-off valve V2 is closed, the purge gas passes through only the capillary C2, with an additional flow resistance. In other words, the additional resistance adjusting mechanism 7 is put into an operating state. By contrast, while the on-off valve V2 is opened, the purge gas passes through the bypass with substantially no resistance. In other words, the resistance adding mechanism 7 is in a state with no addition of the flow resistance, that is, in the non-operating state.

In the present embodiment, a command device (not illustrated) for electrically controlling the on-off valve is provided. The command device includes what is called a computer including a CPU, a memory, an A/D converter, a D/A converter, and various input/output units, for example. The CPU and the peripheral devices cooperate with one another in accordance with a program stored in the memory, to control each of the valves described above by sending a command signal thereto.

In addition, in FIG. 1, a channel 6 and a switching valve V5 are provided to feed the purge gas into the analyzing unit 2. In this embodiment, the switching valve V5 is operated when the heating furnace 1 is to be purged so that the analyzing unit 2 is purged at the same time.

A purging operation of the elemental analysis device 100 will now be explained.

In the purging operation, an initial pressurizing operation for applying a pressure to the heating furnace 1, a depressurizing operation for depressurizing the heating furnace 1, a high-speed purging operation for sending the purge gas while keeping the pressure of the pressurizing furnace 1 low (to the atmospheric pressure in this example), and a pre-analysis purging operation for sending the purge gas while raising the pressure of the heating furnace 1 to a high level that is required for an analysis are performed in the order listed herein, before the analysis.

During this series of purging operations, the valves are automatically controlled by command signals from the command device.

To begin with, before the purging operation is started, an empty graphite crucible 11 is set inside the heating furnace 1.

The initial pressurizing operation is then performed for a short time period (e.g., 2 seconds).

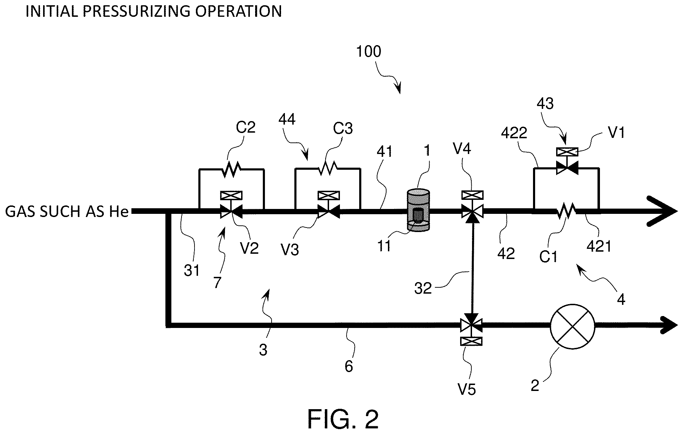

In this initial pressurizing operation, as illustrated in FIG. 2, the switching valve V4 is opened to be connected to the discharge channel 42. The on-off valves V3 and V2 are then opened to shift both of the purge gas flow rate limiting mechanism 44 and the resistance adding mechanism 7 to the non-operating state. The on-off valve V1 is closed in the purge gas flow rate adjusting mechanism 43 so that the purge gas flows only through the capillary C1, that is, the flow resistance of the exhaust flow channel 42 is set high.

An on-off valve (not illustrated) provided at the base of the injection channel 41 is then opened so that the purge gas flows into the heating furnace 1 via the injection channel 41, and is discharged via the exhaust flow channel 42. During this initial pressurizing operation, because there is a flow resistance imposed by the capillary C1 in the exhaust flow channel 42, while there is almost no flow resistance in the injection channel 41, the pressure of the pressurizing furnace 1 is increased to a high level (e.g., 80 kPa) that is a level based on a pressure regulating valve (not illustrated) provided at the base of the injection channel 41. The flow rate of the purge gas is substantially determined only by the flow resistance of the capillary C 1 in the purge gas flow rate adjusting mechanism 4. Because, in this embodiment, the flow resistance of the capillary C 1 is set lower than those of the other capillaries C2 and C3 (a specific magnitude relationship of the flow resistance in the present embodiment is C2 > C3 > C1), the flow rate of the purge gas is higher than that during the depressurizing operation and the high-speed purging operation, which will be described later.

The depressurization operation is then performed for a short time (for example, 1 second).

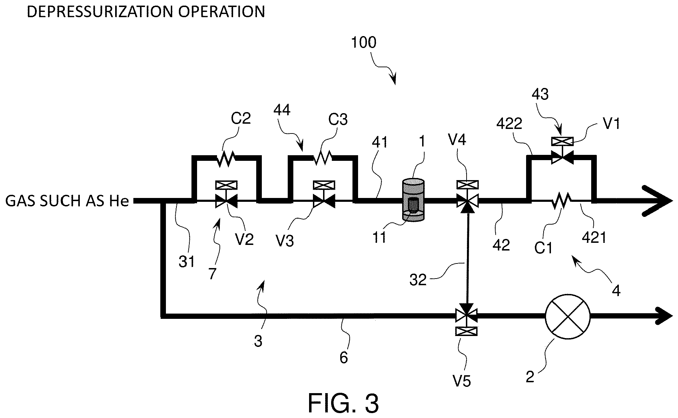

During this depressurizing operation, as illustrated in FIG. 3, the on-off valves V3 and V2 are both closed, and the purge gas flow rate limiting mechanism 44 and the resistance adding mechanism 7 are both put in the operating state. By contrast, the purge gas flow rate adjusting mechanism 43 is put into a state with the on-off valve V1 opened so that the flow is not affected by the flow resistance of the capillary C1, that is, into a state in which the flow resistance of the exhaust flow channel 42 is low.

As a result, while the flow resistance is set high on the side of the injection channel 41, due to the presence of the serial capillaries C2 and C3, there is almost no flow resistance on the side of the exhaust flow channel 42. Therefore, the pressurizing furnace 1 is shifted from the high pressure state at the time of the initial pressurizing operation to the pressure of the atmosphere that is where the exhaust flow channel 42 is connected. The flow rate of the purge gas is substantially determined by the flow resistances of the capillaries C2 and C3 connected in series. Because these serial flow resistances are considerably higher than that of the capillary C1, the flow rate of the purge gas is considerably lower than that during the initial pressurizing operation.

Subsequently, a high-speed purging operation is then performed for a predetermined time period (e.g., 30 seconds).

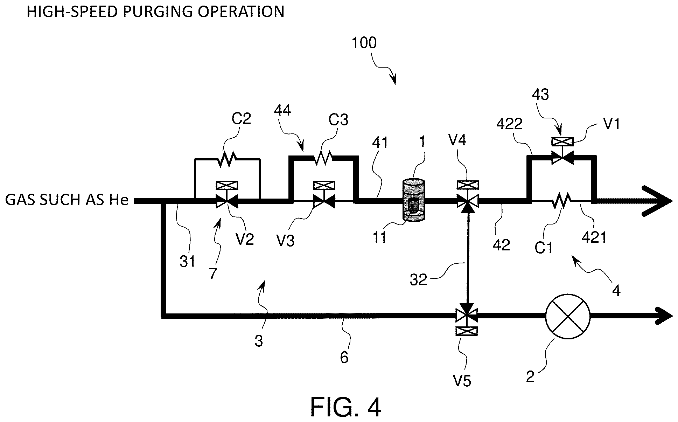

At the time of the high-speed purging operation, as illustrated in FIG. 4, the on-off valve V2 in the resistance adding mechanism 7 is opened and put into a non-operating state.

As a result, because, while the flow resistance of the capillary C3 in the purge gas flow rate limiting mechanism 44 is imposed on the side of the injection channel 41, there is almost no flow resistance on the side of the exhaust flow channel 42, the pressurizing furnace 1 is maintained at the atmospheric pressure, in the same manner as in the pressurizing operation. The flow rate of the purge gas is determined by the flow resistance of the capillary C3. Because the flow resistance is set higher than that of the capillary C1, the flow rate of the purge gas becomes lower than that during the initial pressurizing operation, and is higher than that during the depressurizing operation.

A pre-analysis purging operation is then performed subsequently for a predetermined time period (e.g., 5 seconds).

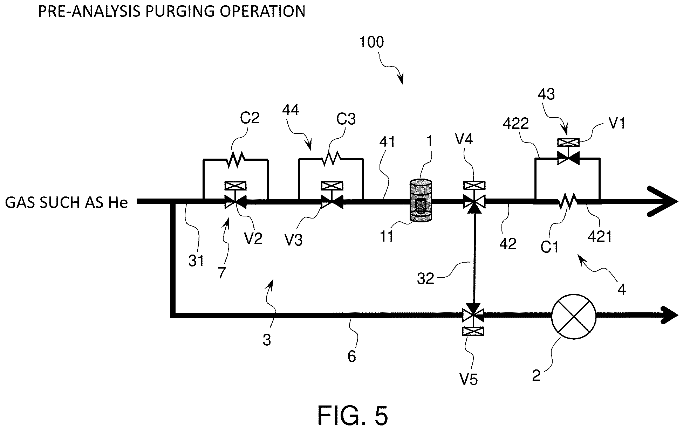

At the time of the pre-analysis purging operation, as illustrated in FIG. 5, the on-off valve V3 of the purge gas flow rate limiting mechanism 44 is opened and put into the non-operating state, and the on-off valve V1 of the purge gas flow rate adjusting mechanism 43 is closed so that the purge gas flows only to the capillary C1, that is, a state in which the flow resistance of the exhaust flow channel 42 is set high. This configuration is the same as that at the time of the initial pressurizing operation.

As a result, as in the initial pressurizing operation, the pressure of the pressurizing furnace 1 is increased to a high level (for example, 80 kPa) that is the level based on the pressure regulating valve (not illustrated) provided at the base of the injection channel 41. The flow rate of the purge gas is the same as that at the time of the initial pressurizing operation.

During the purging operation, the high-speed purging operation, and the pre-analysis purging operation described above, the graphite crucible 11 being heated is kept empty. The reason why the graphite crucible 11 is heated in this manner is to remove and to discharge the hydrogen (H), the oxygen (O), and the nitrogen (N) adsorbed in the graphite crucible 11 and the inner wall of the heating furnace 1 with the purge gas, reliably.

It is also possible to configure the predetermined time periods corresponding to the respective operations to be changeable by an operator or the like inputting values, respectively, to the command device every time an analysis is to be performed.

The switching valve V4 is then switched to open to be connected to the sample gas delivery channel 32.

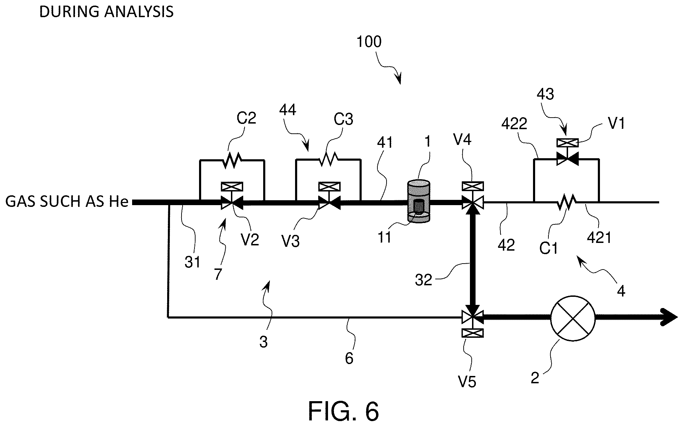

As a result, the purging operation is completed, and an analyzable configuration in which the carrier gas passes through the heating furnace and is introduced into the analyzing unit 2 is achieved, as illustrated in FIG. 6. Once a sample is put into the graphite crucible 11 inside the heating furnace 1, the analysis operation is started.

Thus, with such a configuration, in the process of purging performed before an analysis is started, by performing the high-speed purging operation in which the purge gas is sent while bringing the pressure of the heating furnace 1 near the atmospheric pressure (actually, substantially the atmospheric pressure), substantial portion of the purging is completed within a short time period. By then performing the pre-analysis purging operation in which the flow resistance of the discharge channel 42 is set high so that the internal pressure of the heating furnace 1 is increased by the effect of the flow resistance while maintaining the effect of the purging, even if the heating furnace 1 is connected to the analyzing unit 2 to perform the next analysis, it is possible to achieve a condition in which the analysis can be stably performed, immediately, that is, to keep the internal pressure of the heating furnace 1 high with almost no fluctuation.

Therefore, it is possible to make the purging time shorter than that conventionally required, while maintaining the accuracy of analyses. Furthermore, by keeping the purging time the same as that conventionally required, it is possible to make the amount of consumed purge gas smaller than that conventionally required.

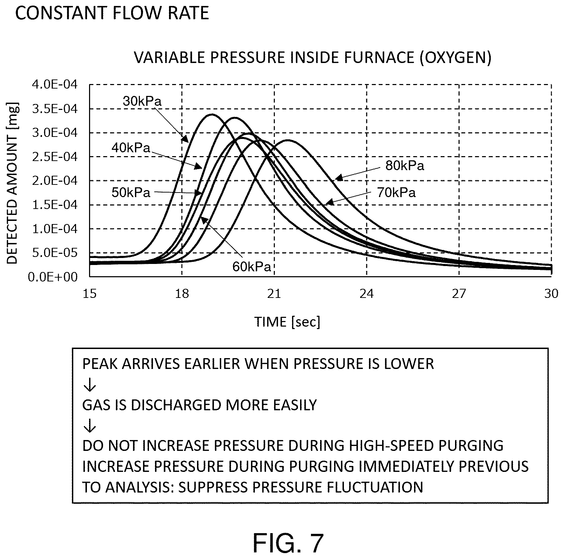

The reason why purging in the high-speed purging operation described above can be completed in a shorter time period is that the heating furnace 1 has been brought to the atmospheric pressure. It was found out, by the inventors of the present invention, that, even if the flow rate is the same, better purging effect can be achieved when the heating furnace is nearer to the atmospheric pressure, and such experiment data is indicated in FIG. 7. The graph in FIG. 7 indicates that, when the peak is further on the left, the better the purging effect is. In the case of oxygen, as is clear from the graph, as the pressure decreases and approaches the atmospheric pressure, the peak is shifted further toward the left. Similar tendency was observed for nitrogen gas.

In this embodiment, by setting a purge gas flow rate lower than that conventionally required by adjusting the flow resistance of the capillary C3, the amount of purge gas consumption is reduced, while achieving a reduction in the purging time at the same time.

Note that the present invention is not limited to the embodiment described above.

For example, the purge gas flow rate adjusting mechanism 43 may be configured to be able to switch the flow rate of the purge gas between three or more levels, by providing two or more capillaries in parallel, or may be configured to be able to adjusting the flow rate of the purge gas continuously, in a non-incremental fashion, by using a variable valve in the resistive channel to change the resistance continuously. With such a configuration, the flow rate of the purge gas is decreased in the later phase of the purging, to achieve a constant pressure inside the heating furnace 1 at the time when the purging is ended.

The resistive channel is not limited to the capillary, but may also be an orifice, for example.

A channel system of the purge gas used at the time of purging may be provided separately from a channel system of the carrier gas used at the time of analysis, by connecting the start end of the discharge channel 42 directly to the heating furnace 1, or providing a separate carrier gas introduction channel 31 and injection channel 41, for example. In such a configuration, it is possible to use different types of gases as the carrier gas and the purge gas.

The various on-off valves, switching valves, pipe arrangement related thereto, and the like may be changed by using other types of valves or the like, as long as equivalent functions are achieved thereby.

The purge gas flow rate limiting mechanism 44 is not necessarily required.

The resistive channel is not limited to the capillary, and may be configured as an orifice or the like.

In addition, the present invention is not limited to the above embodiment, and various modifications can be made within the scope not deviating from the gist of the present invention.

### Industrial Applicability

According to the present invention described above, in an elemental analysis device including a heating furnace that heats a sample to generate a sample gas, an analyzing unit that analyzes an element contained in the sample based on the sample gas, and a purging mechanism 4 that discharges a residual gas in the heating furnace by circulating a purge gas, it is possible to shorten a time required for purging without sacrificing the accuracy of the analysis.

## Claims

1. An elemental analysis device comprising:
a heating furnace that heats a sample to generate a sample gas;
an analyzing unit that analyzes an element contained in the sample based on the sample gas; and
a purging mechanism that circulates a purge gas to discharge a residual gas inside the heating furnace, wherein
the purging mechanism includes
an injection channel that injects the purge gas into the heating furnace,
a discharge channel that connects the heating furnace to outside air, and discharges the purge gas having been injected into the heating furnace to the outside air, and
a purge gas flow rate adjusting mechanism that adjusts a flow rate of the purge gas by changing a flow resistance of the discharge channel between a plurality of levels, or continuously.

2. The elemental analysis device according to claim 1, wherein
the discharge channel includes a first exhaust channel and a second exhaust channel that are provided in parallel with each other, and
the purge gas flow rate adjusting mechanism includes an on-off valve that opens or closes the second exhaust channel so that the flow resistance of the discharge channel is changed between two levels.

3. The elemental analysis device according to claim 2, wherein the first exhaust channel includes a resistive channel, and the first exhaust channel has a higher flow resistance than a flow resistance of the second exhaust channel.

4. The elemental analysis device according to claim 3, wherein the second exhaust channel is made only from a piping member.

5. The elemental analysis device according to any one of claims 1 to 4, wherein the purge gas flow rate adjusting mechanism keeps the flow resistance of the discharge channel low for a certain period of time, and then changes the flow resistance to high.

6. The elemental analysis device according to any one of claims 1 to 5, further comprising a purge gas flow rate limiting mechanism that is provided to the injection channel, and that imposes a limit on a maximum flow rate of the purge gas, wherein
the purge gas channel limiting mechanism is configured to be switchable between an operating state where a flow rate limiting operation is performed and a non-operating state where the flow rate limiting operation is not performed.

7. The elemental analysis device according to claim 6, wherein
the discharge channel has a first exhaust channel and a second exhaust channel that are provided in parallel with each other, and the purge gas flow rate adjusting mechanism includes an on-off valve that opens or closes the second exhaust channel so that the flow resistance of the discharge channel is changed between two levels, and
the purge gas channel limiting mechanism is in the operating state when the second exhaust channel is opened, and the purge gas channel limiting mechanism is in the non-operating state when the second exhaust channel is closed.

8. A method for operating an elemental analysis device that includes a heating furnace that heats a sample to generate a sample gas, an analyzing unit that detects the sample gas and analyzes an element contained in the sample, and a purging mechanism that circulates a purge gas to discharge a residual gas inside the heating furnace,
the purging mechanism including an injection channel that injects the purge gas into the heating furnace, a discharge channel that connects the heating furnace to outside air, and discharges the purge gas having been injected into the heating furnace to the outside air, and a purge gas flow rate adjusting mechanism that changes a flow resistance of the discharge channel between a plurality of levels, or continuously,
the method comprising, when the purge gas is discharged, keeping the flow resistance of the discharge channel low for a certain period of time, and then changing the flow resistance to high, by operating the purge gas flow rate adjusting mechanism.

9. A program for operating an elemental analysis device that includes a heating furnace that heats a sample to generate a sample gas, an analyzing unit that detects the sample gas and analyzes an element contained in the sample, and a purging mechanism that circulates a purge gas to discharge a residual gas inside the heating furnace,
the purging mechanism including an injection channel that injects the purge gas into the heating furnace, a discharge channel that connects the heating furnace to outside air, and discharges the purge gas having been injected into the heating furnace to the outside air, and a purge gas flow rate adjusting mechanism that changes a flow resistance of the discharge channel between a plurality of levels, or continuously,
the program causing a computer to exert a function, when the purge gas is discharged, of keeping the flow resistance of the discharge channel low for a certain period of time, and then changing the flow resistance to high, by operating the purge gas flow rate adjusting mechanism.
